# FASCICULE DE BREVET EUROPEEN

(11) **EP 0 997 980 B1**
(45) Date de publication et mention de la délivrance du brevet: **15.01.2003**
(21) Numéro de dépôt: 99402697.9
(22) Date de dépôt: 29.10.1999
(51) Int. Cl.: H01R 9/24, H01R 9/26

(54) **Dispositif de connexion pour luminaire**
Verbindungsvorrichtung einer Leuchte
Connecting device for a Luminaire

(30) Priorité: 30.10.1998 FR 9813649
(43) Date de publication de la demande: 03.05.2000
(73) Titulaire: THORN EUROPHANE, F-75008 Paris (FR)
(72) Inventeur: Demots, Patrick, 27800 Saint Victor d'Epine (FR); Carlin, Jean-François, 27700 Heuqueville (FR)
(74) Mandataire: Thévenet, Jean-Bruno

(56) Documents cités:
- EP-A- 0 299 811
- EP-A- 0 686 805
- EP-A- 0 759 630
- DE-A- 4 127 899
- FR-A- 2 608 850
- GB-A- 1 254 304

## Description

### Domaine de l'invention

La présente invention concerne un dispositif de connexion pour luminaire, notamment pour l'éclairage public ou industriel.

### Art antérieur

La grande majorité des luminaires, en particulier ceux équipés de lampes à décharge, sont pourvus de blocs de jonction à usage général, souvent standardisés, à la fois pour le raccordement au réseau d'alimentation électrique et pour les raccordements internes. Ces blocs de jonction sont accompagnés d'un nombre important de câbles de liaison pour assurer les connexions entre les différents composants du luminaire : la lampe, sa douille et sa platine munie classiquement d'un ballast, d'un amorceur, de condensateur(s), fusibles, etc., ainsi que de circuits électriques de coupure imposés par les normes de sécurité et qui garantissent l'intervention des personnels sur le luminaire contre tout risque d'erreur de manipulation, par exemple lors du changement d'une lampe.

Tout ce câblage, outre son coût élevé lié à une absence de facilité de montage, limite de façon importante la fiabilité des liaisons électriques.

Aussi, il est connu pour certaines applications, et plus particulièrement pour les luminaires équipés de tubes fluorescents, des connecteurs spécifiques permettant un raccordement rapide et assurant une coupure de l'alimentation électrique en cas d'intervention sur le luminaire. En général, ces connecteurs comportent une partie mobile attachée à l'élément qui doit être déplacé pendant l'intervention et dont les contacts établissent une liaison électrique en fonctionnement (ces contacts ne sont portés à aucun potentiel dans le cas contraire). Un autre exemple de dispositif de connexion dont la structure est conforme au préambule de la revendication 1 est donné par la demande de brevet français FR-A-2 608 850.

Toutefois, ces connecteurs sont étudiés pour un usage spécifique et ils ne prennent pas en compte l'ensemble des liaisons électriques du luminaire de sorte qu'ils ne procurent aucune simplification de câblage ni aucune commodité particulière de montage.

### Définition et objet de l'invention

L'invention a pour objet un dispositif de connexion dont le montage/démontage soit particulièrement aisé. Un but essentiel de l'invention est aussi de permettre une déconnexion rapide d'une très grande sécurité lors des interventions les plus courantes, comme le remplacement d'une lampe ou d'une platine. Un autre but de l'invention est de réduire de façon notable le nombre de raccordement électriques effectués dans le luminaire.

Ces buts sont atteints par un dispositif de connexion d'un luminaire à un réseau d'alimentation en énergie électrique comportant :
une première partie de connecteur, ou première partie fixe, comportant des premiers contacts électriques reliés à des bornes de liaison à des câbles de raccordement au réseau d'alimentation en énergie électrique,
une deuxième partie de connecteur, ou seconde partie fixe, comportant des deuxièmes contacts électriques reliés à des bornes de liaison à des câbles de raccordement au luminaire,
lesdits premier et deuxième contacts électriques étant positionnés en vis à vis sans aucune liaison électrique entre eux, et une troisième partie de connecteur, ou partie mobile intermédiaire, munie de troisièmes contacts électriques, et destinée à coopérer avec lesdites première et deuxième parties de connecteur afin de réaliser une liaison électrique entre le réseau d'alimentation en énergie électrique et le luminaire, dispositif caractérisé en ce que les contacts électriques de ladite partie mobile intermédiaire comportent au moins un contact métallique muni d'une borne de liaison avec un composant externe au dispositif.

Ainsi, lors d'une intervention courante comme le remplacement d'une lampe, ou plus exceptionnellement d'une platine, le retrait de la pièce mobile intermédiaire permet une déconnexion automatique avec le réseau d'alimentation en énergie électrique tout en garantissant une sécurité maximale.

Selon un premier exemple de réalisation, les contacts électriques de ladite partie mobile intermédiaire comportent au moins deux contacts métalliques destinés à coopérer avec deux contacts correspondants de chacune desdites deux parties fixes Toutefois, les contacts électriques de ladite partie mobile intermédiaire peuvent comporter au moins un contact métallique formé de deux parties indépendantes séparées par une partie d'isolation, chacune de ces deux parties distinctes étant munie d'une borne de liaison avec un composant externe au dispositif.

Avantageusement, les contacts électriques de la partie mobile intermédiaire sont constitués par des contacts métalliques à lames.

De préférence, le positionnement desdits premier et deuxième contacts électriques est assuré avec précision par des moyens de verrouillage solidaires des première et deuxième parties de connecteur et l'une desdites première et deuxième parties de connecteur comporte des moyens de guidage pour recevoir les contacts électriques de ladite troisième partie de connecteur et permettre ainsi un montage de cette troisième partie de connecteur sans aucune aide visuelle.

L'invention concerne également un luminaire pour éclairage public ou industriel comportant une source lumineuse alimentée à partir d'un réseau d'alimentation en énergie électrique au travers d'un tel dispositif de connexion. Avantageusement, la troisième partie de connecteur est alors solidaire d'un ouvrant de ce luminaire.

### Brève description des dessins

D'autres détails et particularités de l'invention ressortiront mieux de la description d'un mode de réalisation préférentiel du dispositif de connexion selon l'invention, donné à titre d'illustration en référence aux dessins annexés sur lesquels :
- la figure 1 montre de façon très schématique l'assemblage des première et deuxième parties de connecteur selon l'invention,
- la figure 2 est une vue de dessous très schématique de la troisième partie de connecteur selon l'invention,
- la figure 3 est un schéma de principe d'un premier exemple de connecteur selon l'invention,
- la figure 4 est un schéma de principe d'un deuxième exemple de connecteur selon l'invention,
- la figure 5 est un schéma de principe d'un troisième exemple de connecteur selon l'invention,
- la figure 6 est un schéma de principe d'un quatrième exemple de la troisième partie de connecteur,
- les figures 7, 8, 9 montrent en perpective dans trois phases de montage successives un exemple préférentiel de réalisation d'un connecteur en trois parties selon l'invention, et
- la figure 10 représente schématiquement un luminaire muni d'un connecteur selon l'invention.

### Description détaillée de modes de réalisation préférentiels

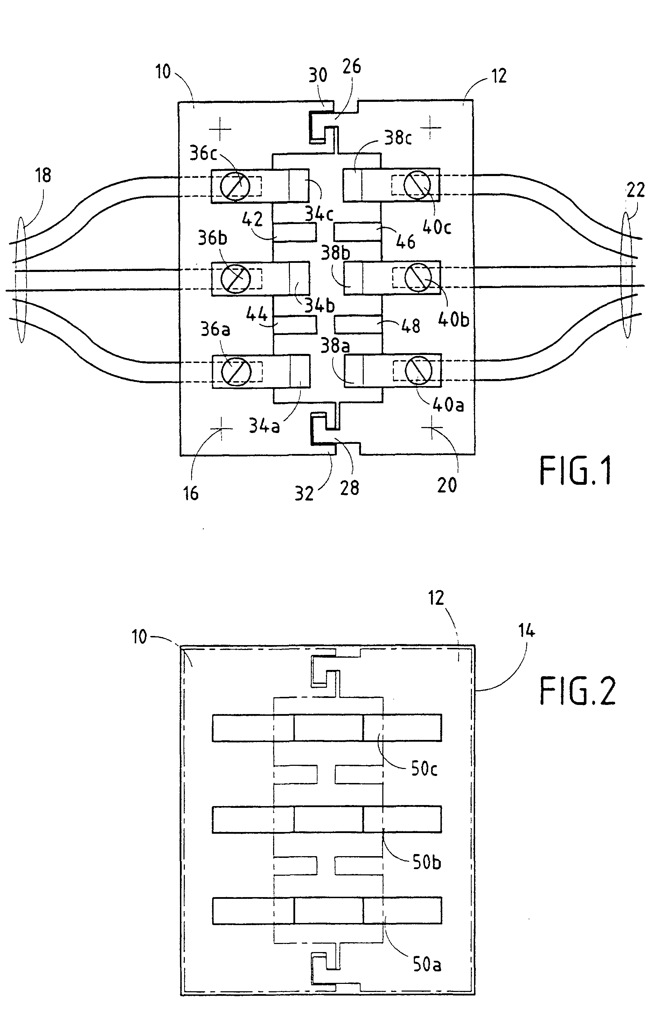

Selon l'invention, le dispositif de connexion est formé de trois parties séparables, deux parties fixes et une partie mobile. Les deux premières parties 10, 12 de ce connecteur sont illustrées à la figure 1 tandis que sa troisième partie 14 est représentée sur la figure 2 (avec un rappel en trait mixte des deux parties fixes).

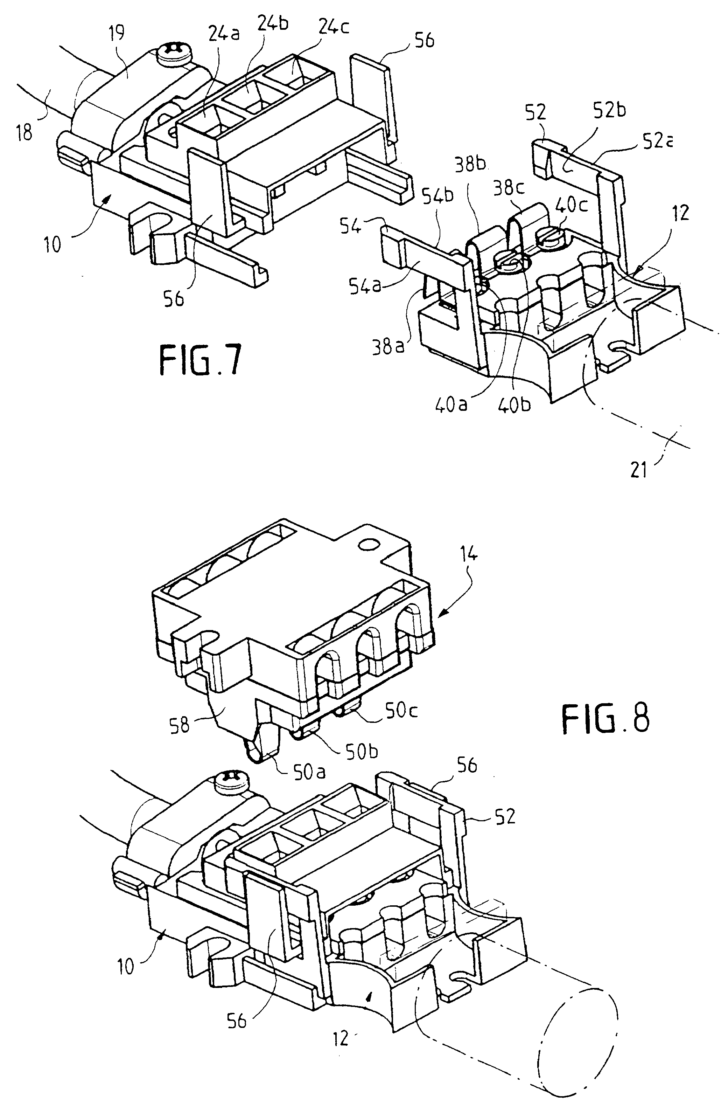

La première partie 10 généralement fixée au corps du luminaire par des premiers moyens de fixation 16 (et ne devant pas être démontée en usage normal) est destinée à recevoir des câbles de raccordement 18, éventuellement maintenus par un serre-câble (voir par exemple la figure 7), au réseau d'alimentation électrique. La deuxième partie 12 fixée par des seconds moyens de fixation 20 (qui doivent au contraire des précédents être facilement démontables) à une autre partie du luminaire, de préférence la platine de réception des composants électriques de ce luminaire (ballast, condensateur (s), etc.), est destinée à recevoir des câbles de raccordement 22 à l'unité d'éclairage du luminaire (par exemple une lampe à décharge).

En position normale de fonctionnement, ces première et deuxième parties de connecteur 10, 12 sont positionnées et maintenues l'une par rapport à l'autre de façon très précise par des moyens de verrouillage, par exemple des crans 26, 28 qui font saillie d'une partie de connecteur et s'engagent, de préférence à coulissement, dans des rainures 30, 32 correspondantes de l'autre partie de connecteur.

Les conducteurs des câbles 18 de raccordement à l'alimentation électrique sont reliés au niveau de la première partie de connecteur 10 à des premiers contacts électriques métalliques 34a, 34b, 34c par l'intermédiaire de bornes (ou bornier) de liaison, par exemple à vis 36a, 36b, 36c. De même. les conducteurs des câbles 22 de raccordement de la lampe sont reliés au niveau de la deuxième partie de connecteur 12 à des deuxièmes contacts électriques métalliques 38a, 38b, 38c par l'intermédiaire de bornes (ou bornier) de liaison, par exemple à vis 40a, 40b, 40c. Les contacts des premières et deuxième parties de connecteur sont exactement en vis à vis mais sans aucune liaison électrique entre eux. En outre, des parois de séparation 42, 44, 46, 48 s'étendant respectivement depuis les première et deuxième parties, jusqu'à éventuellement se joindre, peuvent être avantageusement prévues entre les contacts d'une même partie de connecteur à la fois pour éviter, dans une optique de sécurité, un contact des doigts de l'opérateur avec les parties sous tension (par exemple en cas de toucher accidentel) et pour limiter le cheminement des lignes de fuites entre ces parties actives (une distance dans l'air importante permet en effet d'éviter un éventuel amorçage).

De préférence, les première et deuxième parties de connecteur présentent des structures symétriques par rapport à leurs axes longitudinaux afin de permettre un montage inversé de l'une de ces deux parties. Par montage inversé, on doit entendre la possibilité de retourner une partie de connecteur pour permettre un accès aux bornes de liaison de cette partie retournée par le dessous du connecteur (les bornes de liaison de l'autre partie de connecteur restant normalement accessibles par le dessus).

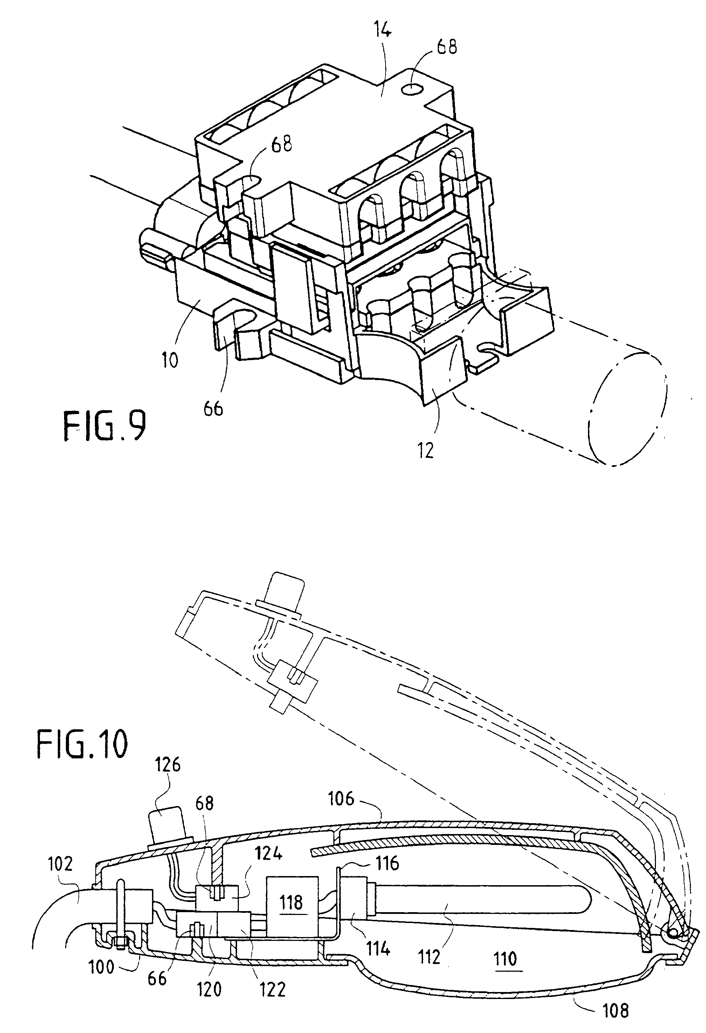

La troisième partie de connecteur formant pièce intermédiaire de liaison mobile 14 est destinée à venir s'emboîter dans les deux autres parties de connecteur 10, 12. Elle comporte essentiellement des troisièmes contacts électriques métalliques 50a, 50b, 50c disposés de telle sorte qu'ils viennent en vis à vis des contacts correspondants des première et deuxième parties de connecteur lors de l'emboîtement des trois parties de connecteur et qui sont donc destinés, d'une part, à assurer la liaison électrique (connexion) lorsque cette partie intermédiaire mobile est insérée entre les deux autres parties fixes et, d'autre part, à rompre cette liaison électrique (déconnexion) lorsque cette partie intermédiaire en est retirée. Lorsque ces trois contacts représentent respectivement la « terre », le « neutre » et la « phase », ils sont agencés de préférence de telle sorte que la connexion/déconnexion électrique soit assurée selon un séquencement déterminé impliquant une réalisation de la liaison électrique de terre en premier et, au contraire, une rupture de cette liaison de terre en dernier. Avantageusement, cette troisième partie de connecteur est fixée à un ouvrant du luminaire (voir par exemple la figure 10) permettant un accès aux constituants internes du luminaire.

Ainsi, selon l'invention, la liaison électrique ne peut être réalisée que par la mise en place de la partie mobile de connecteur 14 au niveau des deux autres parties 10, 12, cette partie mobile, qui peut être qualifiée « d'active » dans l'exemple illustré, portant les contacts qui vont établir cette liaison. Toutefois, il doit être noté qu'une partie mobile « passive », par exemple un poussoir, venant agir directement sur les contacts des parties fixes pour assurer cette liaison électrique en les plaquant les uns contre les autres est tout aussi envisageable.

Les différents contacts métalliques sont de préférence du type à lames mais des contacts d'un autre type sont aussi envisageables, comme des contacts à plots.

Bien entendu, le nombre de contacts précités (trois par partie de connecteur) ne saurait en aucun cas être limitatif et un tel connecteur peut tout aussi bien comporter deux contacts par partie de connecteur (un contact de phase et un contact de neutre) que cinq contacts (trois contacts de phase, un contact de neutre et un contact de terre).

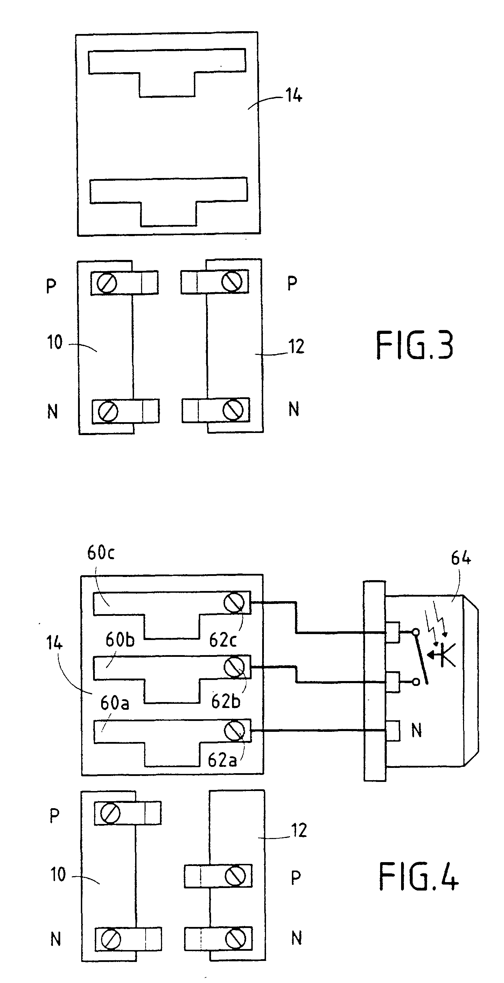

Les figures 3 à 6 montrent de façon schématique plusieurs exemples de mise en oeuvre d'un connecteur tripartite selon l'invention.

Sur la figure 3, on a représenté un premier exemple dans lequel chacune des parties 10, 12, 14 de connecteur comporte seulement deux contacts (dans un souci de meilleure compréhension des dessins, la partie mobile intermédiaire est représentée à plat). Les contacts des deux parties fixes 10, 12 qui sont disposés en vis à vis permettent d'assurer une connexion électrique sur deux fils, par exemple entre phase et neutre, lorsqu'ils sont mis en liaison par les contacts de la partie intermédiaire 14. Bien entendu, une telle liaison pourrait aussi être obtenue avec un connecteur à trois contacts en laissant l'un des contacts sans raccordement électrique.

La figure 4 illustre une variante de la figure 3 dans laquelle la partie intermédiaire 14 est maintenant munie de trois contacts centraux 60a, 60b, 60c qui sont chacun reliés à une borne ou bornier de liaison 62a, 62b, 62c. Cette borne permet une connexion externe de la partie intermédiaire 14 avec tout type de composant, par exemple une cellule photoélectrique de type conventionnel 64. Ainsi, en reliant la borne « neutre » de cette cellule par exemple à la borne de liaison 62a et donc au contact central 60a et les deux autres bornes de la cellule aux deux autres contacts de la partie intermédiaire, il est possible de réaliser très simplement une commande automatique d'un luminaire relié à la deuxième partie 12 à partir du réseau d'alimentation électrique relié à la première partie 10 (sous réserve, bien entendu, de disposer convenablement les contacts « neutre » et « phase » de ces deux dernières parties de connecteur à l'image de la figure 4).

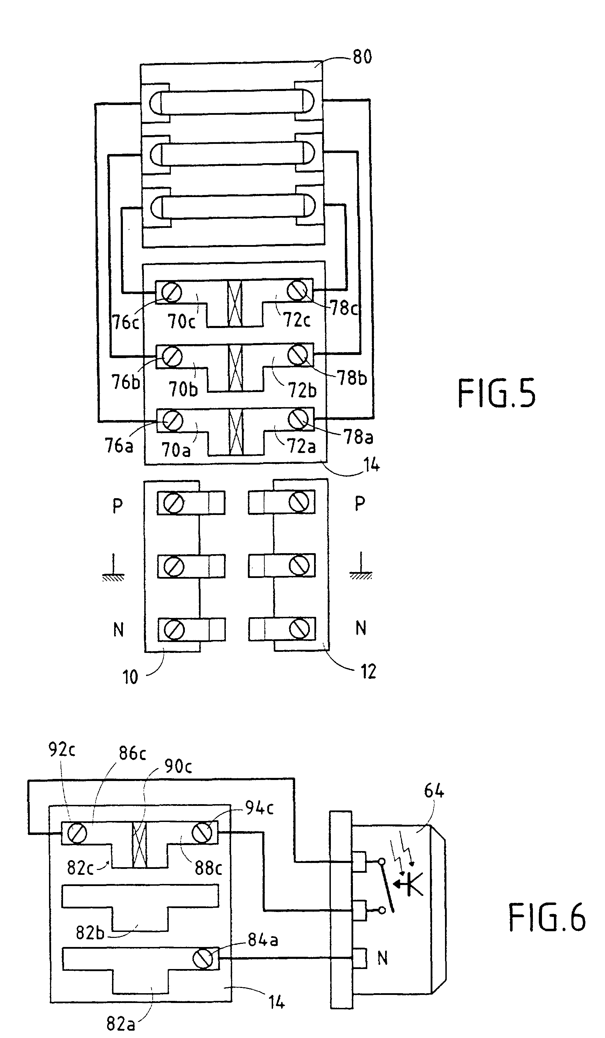

Un autre exemple de câblage rendu possible avec le connecteur selon l'invention est montré sur la figure 5. Dans cette réalisation, les parties fixes 10, 12 comportent chacune trois contacts disposés en vis à vis et correspondant respectivement au « neutre » à la « phase » et à la « terre ». Ces contacts sont destinés à être connectés, pour la première partie de connecteur 10, au réseau électrique et, pour l'autre partie 12, au luminaire. Les trois contacts de la partie intermédiaire 14 sont pour leur part dédoublés, c'est à dire que chaque contact est divisé en deux parties de contact 70a, 72a (respectivement b et c) séparés par une partie isolante 74a qui interdit toute liaison électrique entre ces deux parties indépendantes de contacts. Des bornes de liaison 76a, 78a sont en outre reliées à ces parties séparées de contacts pour permettre l'adjonction de composants externes, par exemple un boîtier de filtres hautes fréquence 80.

La figure 6 est une variante de la figure 5 comportant également des parties fixes à trois contacts et destinée à permettre une liaison avec une cellule photoélectrique 64. Toutefois, contrairement à la structure dont il a été fait état précédemment, la partie intermédiaire est munie de contacts 82a. 82b, 82c de différentes natures. Ainsi, le premier contact 82a est un contact simple avec une borne de liaison unique 84a, le deuxième contact 82b est un contact simple sans borne de liaison et le troisième contact 82c est un contact double avec deux parties de contact 86c, 88c séparées par une partie d'isolation 90c et deux bornes de liaison 92c, 94c. Cet exemple illustre parfaitement la grande souplesse du connecteur selon l'invention et plus particulièrement de sa partie intermédiaire qui peut comporter différents types de contacts.

On aura compris que les deux exemples de composants illustrés ci-dessus et mis en oeuvre avec le connecteur de l'invention ne sont en aucune façon les seuls envisageables et que les bornes de liaison des contacts de la partie mobile intermédiaire peuvent être utilisées pour connecter toutes sortes de composants, par exemple et sans être limitatif : des témoins de présence de tension, des parafoudres, des fusibles, etc.

Les figures 7 à 9 illustrent un exemple préférentiel de réalisation d'un connecteur selon l'invention. Sur la figure 7, on retrouve les première 10 et deuxième 12 parties de connecteur qui sont présentées séparément l'une à côté de l'autre avant emboîtement. La première partie de connecteur est reliée à un réseau d'alimentation électrique par le câble de liaison 18 qui est avantageusement maintenu en place au niveau de cette première partie de connecteur par un serre-câble 19. La deuxième partie de connecteur est reliée au luminaire (ou plus précisément à sa douille 21) par un autre câble de liaison non représenté. On peut aussi noter la présence des contacts 38a, 38b, 38c et des bornes de liaison 40a, 40b, 40c de cette deuxième partie de connecteur 12. Pour permettre un emboîtement efficace de ces deux parties l'une dans l'autre, tel que le montre la figure 8 (sur laquelle apparaît également la partie mobile intermédiaire 14 avec ses contacts à lames 50a, 50b, 50c), la deuxième partie de connecteur 12 comporte avantageusement sur chacun de ces deux côtés longitudinaux un bras élastique 52, 54 en forme de « Γ » dont la barre supérieure comporte sur chacune de ses deux faces un méplat 52a, 52b ; 54a, 54b destinés à venir en contact respectivement avec des languettes de verrouillage 56, 58 des première 10 et troisième 14 parties de connecteur. De même, afin de faciliter l'emboîtement de la partie mobile qui est réalisé de préférence sans aucune aide visuelle, l'une des parties fixes comporte des moyens de guidage des contacts de cette partie mobile, par exemple des cavités tronconiques de réception 24a, 24b, 24c. Une fois ces emboîtements successifs réalisés, le connecteur se présente monté, comme l'illustre la figure 9.

Il est clair que pour obtenir un fonctionnement correct et un montage aisé et rapide, ces trois parties doivent être montées selon le séquencement particulier des figures 7 à 9. C'est à dire, tout d'abord, les fils de liaison au réseau doivent faire l'objet d'un montage sur site sur la première partie de connecteur elle même fixée par des moyens de fixation (au travers du trou 66) sur une partie fixe du luminaire. Ensuite, les fils de liaison au luminaire ayant été préalablement reliés à la deuxième partie de connecteur (mais un montage sur site est aussi possible), il est procédé à l'emboîtement et à un verrouillage léger des première et deuxième parties de connecteur par la coopération des bras et languettes de verrouillage 52, 54, 56. Enfin, la troisième partie de connecteur fixée à une partie mobile du luminaire par des moyens de fixation passant par les orifices 68 peut être mise en place, sans aide visuelle particulière, du fait du guidage des contacts par les cavités de réception de ces contacts, les languettes de verrouillage 58 de cette troisième partie confirmant le verrouillage complet du connecteur.

La figure 10 illustre de façon schématique un luminaire muni d'un connecteur selon l'invention. Classiquement, ce luminaire comporte un châssis ou corps 100 monté sur un mât support 102 à travers duquel le luminaire est relié à un réseau d'alimentation en énergie électrique externe. Le châssis comporte à sa partie inférieure une vasque transparente 104 et est fermé à sa partie supérieure par un capot articulé 106 (par exemple au niveau d'une extrémité avant du châssis opposée au mât support). Le capot supporte un réflecteur 108 qui défini un compartiment fermé 110 avec la vasque transparente et à l'intérieur duquel est disposée une source lumineuse 112. Cette source lumineuse est montée sur une douille 114 elle même montée fixement sur une platine 116 qui supporte par ailleurs les différents composants électroniques 118 nécessaires à la commande du luminaire (condensateur, amorceur, ballast, etc.). La platine 116 est classiquement fixée sur le châssis du luminaire 100.

Selon l'invention, le connecteur assurant la liaison électrique entre le réseau externe d'alimentation en énergie et la source lumineuse est formé de trois parties indépendantes. La première partie de connecteur 120 est fixée sur le châssis du luminaire et permet d'assurer la liaison électrique avec le réseau d'alimentation. La seconde partie de connecteur 122 est montée sur la platine 116 dont elle est solidaire et permet d'assurer la liaison électrique avec la source lumineuse. La troisième partie de connecteur 124 est quant à elle fixée sur le capot du luminaire et est donc mobile avec celui-ci. De même, cette troisième partie de connecteur peut par exemple être reliée à une cellule photoélectrique 126 montée sur le capot (selon la configuration de la figure 6). L'ouverture ou la fermeture de ce capot qui fait fonction d'ouvrant va donc assurer automatiquement une connexion/déconnexion de l'alimentation électrique de la source lumineuse garantissant ainsi la sécurité de tout opérateur quelles que soient les interventions effectuées à l'intérieur du luminaire.

## Revendications

1. Dispositif de connexion d'un luminaire à un réseau d'alimentation en énergie électrique comportant :
une première partie de connecteur (10; 120), ou première partie fixe, comportant des premiers contacts électriques (34a, 34b, 34c) reliés à des bornes (36a, 36b, 36c) de liaison à des câbles (18) de raccordement au réseau d'alimentation en énergie électrique,
une deuxième partie de connecteur (12 ; 122), ou seconde partie fixe, comportant des deuxièmes contacts électriques (38a, 38b, 38c) reliés à des bornes (40a, 40b, 40c) de liaison à des câbles (22) de raccordement au luminaire, lesdits premier et deuxième contacts électriques étant positionnés en vis à vis sans aucune liaison électrique entre eux,
et une troisième partie de connecteur (14 ; 124), ou partie mobile intermédiaire, munie de troisièmes contacts électriques (50a, 50b, 50c), et destinée à coopérer avec lesdites première et deuxième parties de connecteur afin de réaliser une liaison électrique entre le réseau d'alimentation en énergie électrique et le luminairc, dispositif **caractérisé en ce que** lesdits contacts électriques de ladite partie mobile intermédiaire comportent au moins un contact métallique muni d'une borne de liaison (62 ;76, 78 ; 84 ; 92, 94) avec un composant (64, 80) externe au dispositif.

2. Dispositif de connexion selon la revendication 1, **caractérisé en ce que** les contacts électriques de ladite partie mobile intermédiaire comportent au moins deux contacts métalliques destinés à coopérer avec deux contacts correspondants de chacune desdites deux parties fixes.

3. Dispositif de connexion selon la revendication 1, **caractérisé en ce que** les contacts électriques de la partie mobile intermédiaire comportent au moins un contact métallique formé de deux parties indépendantes (70, 72 ;86, 88) séparées par une partie d'isolation (74 ;90), chacune de ces deux parties distinctes étant munie d'une borne de liaison (76, 78 ;92, 94) avec un composant (64, 80) externe au dispositif.

4. Dispositif de connexion selon l'une quelconque des revendications 1 à 3, **caractérisé en ce que** les contacts électriques de la partie mobile intermédiaire sont constitués par des contacts métalliques à lames.

5. Dispositif de connexion selon la revendication 1, **caractérisé en ce que** le positionnement desdits premier et deuxième contacts électriques est assuré avec précision par des moyens de verrouillage (26, 28, 30, 32 ;52, 54, 56, 58) solidaires des première et deuxième parties de connecteur.

6. Dispositif de connexion selon la revendication 1, **caractérisé en ce que** l'une desdites première et deuxième parties de connecteur comporte des moyens de guidage (24) pour recevoir les contacts électriques (50) de ladite troisième partie de connecteur et permettre ainsi un montage de cette troisième partie de connecteur sans aucune aide visuelle.

7. Luminaire pour éclairage public ou industriel comportant une source lumineuse alimentée à partir d'un réseau d'alimentation en énergie électrique au travers d'un dispositif de connexion selon l'une quelconque des revendications 1 à 6.

8. Luminaire selon le revendication 7, **caractérisé en ce que** ladite troisième partie de connecteur (124) est solidaire (68) d'un ouvrant (106) de ce luminaire.

## Patentansprüche

1. Vorrichtung zum Verbinden einer Leuchte mit einem elektrischen Stromnetz, umfassend:
einen ersten Verbinder (10; 120) oder ersten ortsfesten Teil, der erste elektrische Kontakte (34a, 34b, 34c) aufweist, die an Verbindungsanschlussklemmen (36a, 36b, 36c) von Netzanschlusskabeln (18) angeschlossen sind,
einen zweiten Verbinderteil (12; 122) oder zweiten ortsfesten Teil, der zwei elektrische Kontakte (38a, 38b, 38c) aufweist, die mit Anschlussklemmen (40a, 40b, 40c) von Leuchten-Anschlussgabeln (32) verbunden sind, wobei die ersten und zweiten elektrischen Kontakte ohne gegenseitige elektrische Verbindung einander gegeüberliegend angeordnet sind,
und einen dritten Verbinderteil (14; 31; 24) oder beweglichen Zwischenteil, ausgestattet mit dritten elektrischen Kontakten (50a, 50b, 50c), und ausgestaltet für das Zusammenwirken mit dem ersten und dem zweiten Verbinderteil zu dem Zweck, eine elektrische Verbindung zwischen dem elektrischen Netz und der Leuchte herzustellen,
**dadurch gekennzeichnet,**
**dass** die elektrischen Kontakte des beweglichen Zwischenteils mindestens einen metallischen Kontakt aufweisen, der mit einem Verbindungsanschluss (62; 76, 78; 84; 92, 94) zu einem zu der Vorrichtung externen Bauteil (64, 80) ausgestattet ist.

2. Vorrichtung nach Anspruch nach Anspruch 1,
**dadurch gekennzeichnet,**
**dass** die elektrischen Kontakte des beweglichen Zwischenteils mindestens zwei metallische Kontakte tragen, die bestimmt sind für das Zusammenwirken mit zwei entsprechenden Kontakten jedes der beiden ortsfesten Teile.

3. Vorrichtung nach Anspruch nach Anspruch 1,
**dadurch gekennzeichnet,**
**dass** die elektrischen Kontakte des beweglichen Zwischenteils mindestens einen metallischen Kontakt aufweisen, der aus zwei unabhängigen Teilen (70, 72; 86, 88) gebildet ist, die durch einen Isolierteil (74; 90) getrennt sind, wobei jedes dieser beiden Teile mit einem Verbindungsanschluss (76, 78; 92, 94) zu einem zu der Vorrichtung externen Bauteil (64, 80) ausgestattet ist.

4. Vorrichtung nach Anspruch nach einem der Ansprüche 1 bis 3,
**dadurch gekennzeichnet,**
**dass** die elektrischen Kontakte des beweglichen Zwischenteils durch metallische Kontaktzungen gebildet sind.

5. Vorrichtung nach Anspruch nach Anspruch 1,
**dadurch gekennzeichnet,**
**dass** die Anordnung der ersten und zweiten elektrischen Kontakte mit Genauigkeit durch Verrastungsmittel (26, 28, 30, 32; 52, 54, 56, 58) garantiert ist, die einstückig mit dem ersten und dem zweiten Verbinderteil ausgebildet sind.

6. Vorrichtung nach Anspruch nach Anspruch 1,
**dadurch gekennzeichnet,**
**dass** einer von dem ersten und dem zweiten Verbinderteil Führungsmittel (24) aufweist, um die elektrischen Kontakte (50) des dritten Verbinderteils aufzunehmen und so die Halterung dieses dritten Verbinderteils ohne jegliches sichtbare Hilfsmittel zu ermöglichen.

7. Leuchte für die öffentliche oder industrielle Beleuchtung, umfassend eine Beleuchtungsquelle, die aus einem elektrischen Energienetz über eine Verbindungsvorrichtung nach einem der Ansprüche 1 bis 6 gespeist wird.

8. Leuchte nach Anspruch 7,
**dadurch gekennzeichnet,**
**dass** der dritte Verbinderteil (124) einstückig (68) mit einem Hängeteil (106) der Leuchte ausgebildet ist.

## Claims

1. A device for connecting a luminaire to an electric power supply network comprising
a first connector part (10; 120) or first fixed part, comprising first electric contacts (34a, 34b, 34c) connected to terminals (36a, 36b, 36c) for connecting to cables (18) for connection to the electric power supply network,
a second connector part (12; 122), or second fixed part, comprising second electric contacts (38a, 38b, 38c) connected to terminals (40a, 40b, 40c) for connection to cables (22) for connection to the luminaire, the said first and second electric contacts being positioned facing one another without any electric connection between them,
and a third connector part (14; 124), or intermediate movable part, provided with third electric contacts (50a, 50b, 50c) and intended to co-operate with said first and second connector parts in order to provide an electric connection between the electric power supply network and the luminaire, the device being **characterised in that** the said electric contacts of the said intermediate movable part comprises at least one metal contact provided with a terminal (62; 76, 78; 84; 92, 94) for connection with a component (64, 80) outside the device.

2. A connecting device according to claim 1, **characterised in that** the electric contacts of the said intermediate movable part comprise at least two metal contacts intended to co-operate with two corresponding contacts of each of the said two fixed parts.

3. A connecting device according to claim 1, **characterised in that** the electric contacts of the intermediate movable part comprise at least one metal contact formed by two independent parts (70, 72; 86, 88) separated by an insulating part (74; 90), each of said two separate parts being provided with a terminal (76, 78; 92, 94) for connection to a component (64, 80) outside the device.

4. A connecting device according to any one of claims 1 to 3, **characterised in that** the electric contacts of the intermediate movable part are formed by metal blade contacts.

5. A connecting device according to claim 1, **characterised in that** the positioning of the said first and second electric contacts is provided with precision by locking means (26, 28, 30, 32; 52, 54, 56, 58) secured to the first and second connector parts.

6. A connecting device according to claim 1, **characterised in that** one of said first and second connector parts comprises guide means (24) to receive the electric contacts (50) of the said third connector part and thus allow assembly of said third connector part without any visual aid.

7. A luminaire for public or industrial illumination comprising a light source supplied from an electric power supply network through a connection device according to any one of claims 1 to 6.

8. A luminaire according to claim 7, **characterised in that** the said third connector part (124) is secured (68) to a leaf (106) of said luminaire.
